Europäisches Patentamt

(19) European Patent Office

Office européen des brevets

(11) Publication number: **0 016 566**
**B1**

# (12) EUROPEAN PATENT SPECIFICATION

(45) Date of publication of patent specification: **12.10.83**

(51) Int. Cl.³: **B 60 T 17/08, F 16 D 65/32**

(21) Application number: **80300626.1**

(22) Date of filing: **03.03.80**

(54) Spring force applying actuators.

<table>
<tr><td>

(30) Priority: **06.03.79 GB 7907826**

(43) Date of publication of application:
**01.10.80 Bulletin 80/20**

(45) Publication of the grant of the patent:
**12.10.83 Bulletin 83/41**

(84) Designated Contracting States:
**AT BE DE FR IT NL SE**

(56) References cited:
**DE - B - 2 646 158**
**DE - U - 7 204 850**
**GB - A - 1 166 544**
**US - A - 4 080 875**

</td><td>

(73) Proprietor: **BENDIX LIMITED**
**Douglas Road**
**Kingswood, Bristol BS15 2NL (GB)**

(72) Inventor: **Dagger, Norman Phillip**
**Bendix Westinghouse Limited Douglas Road**
**Kingswood Bristol BS15 2NL (GB)**
Inventor: **Durrant, Jeremy James**
**Bendix Westinghouse Limited Douglas Road**
**Kingswood Bristol BS15 2NL (GB)**

(74) Representative: **Turner, Alan Reginald**
**c/o Bendix Limited Douglas Road**
**Kingswood, Bristol BS15 2NL (GB)**

</td></tr>
</table>

Courier Press, Leamington Spa, England

## Spring force applying actuators

This invention relates to spring force applying actuators and relates especially but not exclusively to spring brake actuators.

Spring brake actuators have been proposed which include a fluid pressure-responsive member in a housing which, on one side of the pressure-responsive member, houses a heavy spring and, on the other side, provides a pressure chamber which, when pressurised, causes the pressure-responsive member to oppose the force of the spring as applied to a force-transmitting actuator rod. It has also been proposed to provide for disengagement of the pressure-responsive member in relation to the actuator rod to unload the force of the spring from the actuator rod when in an unpressurised condition. Repressurisation may, nevertheless, automatically enable re-engagement.

In one particular proposal, US—A— 4 080 875, a locking mechanism has been proposed selectively operable to couple together the pressure-responsive member and the actuator rod such that movement of the pressure-responsive member due to its spring loading is transmitted to the actuator rod to effect spring actuation of an operating mechanism and such that spring actuation of the operating mechanism can be disengaged by operation of the locking mechanism to uncouple the pressure-responsive member and the actuator rod, the locking mechanism comprising an axially displaceable guide member disposed inside the actuator rod which is arranged to be hollow and locking elements being provided in continuous contact with the guide member, the guide member being operable to move the locking elements into engagement with the pressure-responsive member to couple the pressure-responsive member and the actuator rod together.

A disadvantage of the above previous proposal is that means for axially moving the guide member can give rise to an additional length requirement for the space accommodating the actuator.

This shortcoming can be overcome by the present invention which provides a spring force applying actuator including a housing (4, 204, 304) and a pressure-responsive member (8, 208, 308) between which and the housing a heavy spring (11, 211, 311) is retained, the pressure-responsive member forming a wall of a fluid pressure chamber and being movable by a control pressure applied at a control port (10, 210, 310) to counteract the force of the spring, a tubular force actuator output member (20, 220, 320) extending outwardly of the one end of housing and coupled to the pressure-responsive member via a locking mechanism including a guide member (21, 217, 317) which is axially displaceable inside the tubular member to move one or more locking elements (16, 216, 316) into a locking position between the pressure-responsive member and the tubular member, characterised by an axially captive rotatable release member accessible from outside the housing and extendable into the tubular member and through the guide member to rotatably engage a cam member said cam member having a face which upon rotation is co-operable with a complementary cam face associated with the guide member to produce axial movement of the guide member to enable the or each locking element, to move out of the locking position.

In addition to the possibility of reduced speed requirement the invention can provide the features that it affords the possibility of cheaper and more reliable manufacture than is the case for some prior actuators and at the same time the actuators can be made to be safer by arranging that the components thereof are constrained against flying apart in the event of failure of a vital part.

In order that the invention may be more clearly understood and readily carried into effect, the same will be further described by way of example with reference to the accompanying drawings of which:

Fig. 1 illustrates in part a combined spring and pneumatic brake actuator in accordance with one embodiment of the present proposal,

Fig. 2 illustrates in sectional half-view a spring brake actuator according to a further embodiment of the invention,

Fig. 3 illustrates a part of a combined spring and pneumatic brake actuator employing a modified piston rod and locking means,

Fig. 4 illustrates cam members on an enlarged scale and

Fig. 5 illustrates a manner in which a cam face can be formed in a piston tube of an actuator according to Fig. 3.

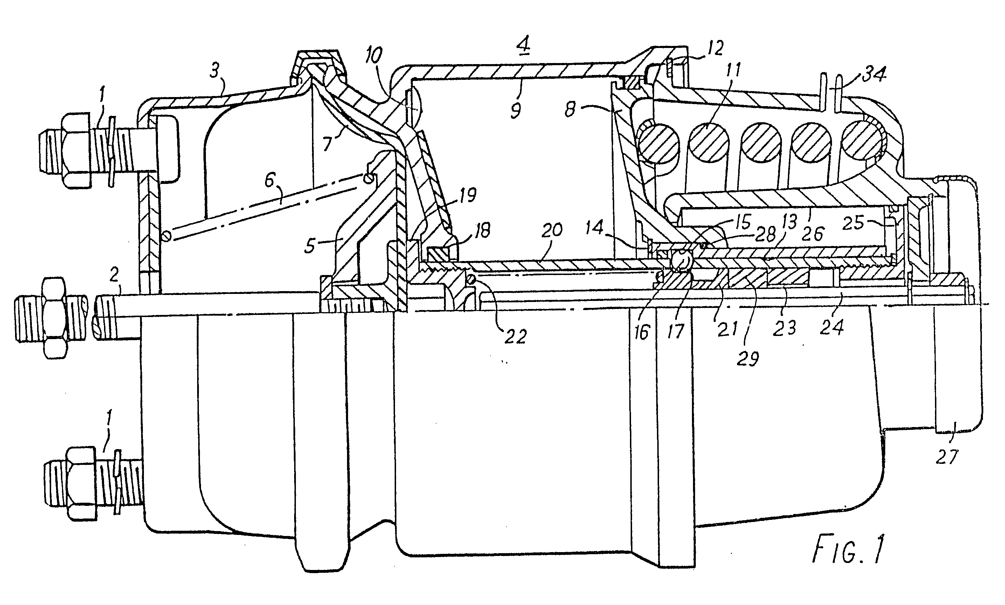

Referring to Fig. 1, this shows the actuator in part-sectioned form and is provided with threaded mounting studs 1 and a threaded output rod 2 for connection to the braking mechanism of a vehicle wheel or wheels. The actuator consists of a pneumatic portion denoted generally by the reference 3 and a spring brake portion denoted generally by the reference 4. The pneumatic portion consists of a pressure-responsive member 5 spring loaded in a sense to withdraw the rod 2 into the actuator by a spring 6 against the effect of a diaphragm 7 clamped between two parts of the housing in generally known manner.

The spring brake portion 4 which consists of a pressure-responsive piston 8 slidable in a cylinder 9 and which is urged by fluid pressure applied at an input port 10 to move against the force of a heavy spring 11 contained within the housing. The housing and cylinder are joined together in known manner by means of a circlip 12 which can only be removed with the aid of a suitable jig for releasing it from an internal annular groove of the cylindrical part of the housing.

The pressure-responsive piston 8 is provided with a tubular portion 13 retained therein by a circlip 14 and sealed therewith by a seal 28 and having an internal annular groove 15 which is engageable with three steel balls such as the one referenced 16 in the drawing, retained in equally spaced apertures such as 17 in a tubular actuator rod 20 which is slidable within the tubular portion 13 and extendable through a seal 18 to engage with the diaphragm 7 via a suitable pressure pad 19. At reference 21 there is provided a guide member of such suitable external shape that when urged rightwardly, as shown in the drawing, by a spring 22, the balls such as 16 are retained in the position shown. However, on being deflected leftwards against the force of the spring 22, the balls such as 16 can move inwardly in relation to the general axis of the device.

For the purposes of displacing the guide member 21 leftwardly against spring 22 in relation to the balls such as 16, the right-hand end base of 21 is provided with a flat annular surface engageable with a complementary flat surface of a member 29. The member 29 is provided with a hexagonal hole whereby it is rotationally keyed but is axially slidable over a captive complementary hexagonal rod 24 which extends outwardly of the actuator via a member 25 which is sealingly slidable in an internal trunk 26 inside the heavy spring 11. The end of member 29 remote from 21 is provided with a cam surface complementary to a cam surface of an adjacent member 23 which is crimped into the tube 20. Parts 21 and 23 each have clearance with the hexagonal rod 24.

In operation of the arrangement, for service braking, the region to the right of the diaphragm 7 may be pressurised via a part which is not shown and effect service braking un-influenced by the spring brake actuator 4. Normally, during such service applications, a full supply pressure is maintained at the input port 10 to maintain the spring 11 in the compressed condition shown such that no force is applied via the pressure pad 19 to the pneumatic actuator portions 3. In the event of the vehicle on which the actuator is mounted being parked, the pressure at the port 10 would normally be released and only by repressurising the spring brakes can the brakes be released to enable the vehicle to be moved. Breathing of the spring chamber is provided via a port 34.

In order to provide for manual release of the brakes, despite unavailability of a source of fluid pressure, the locking mechanism which consists of the guide member 21 and the balls such as 16 engageable within the respective apertures and annular groove, is provided and by rotation of the hexagonal rod 24 after removing the external cap 27, the action of the cam member 29 in relation to the cam face of the complementary member 23 retained in the tube 20 is such as to displace member 21 away from 23 to enable the balls such as 16 to move inwardly and disengage the pressure-responsive member 8 from the tubular actuator rod 20. This enables the force of the spring 11 to urge the piston 8 leftwardly and release the force thereof from the actuator rod 20 and the pad 19 and the output rod 2 of the actuator unit. The piston 8 is prevented from being rotated by the rod 24 by virtue of friction and the force exerted by the spring 11.

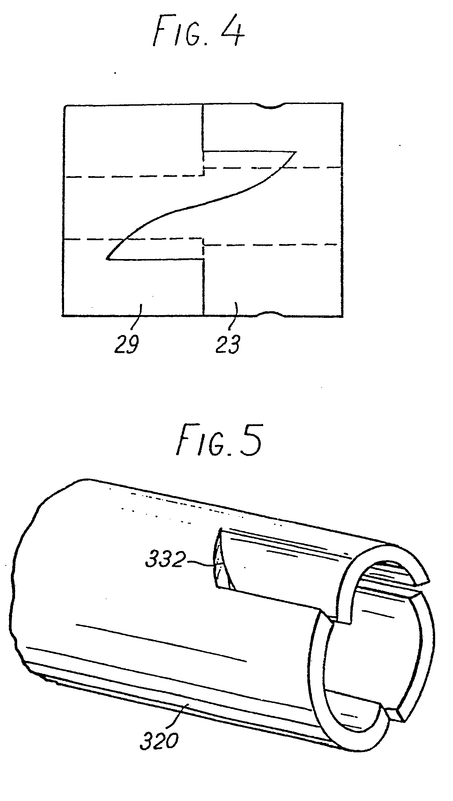

Typical cam shapes are shown in Fig. 4 for parts 29 and 23 and three such pairs of cams would be provided thereon at 120° spacings.

On repressurising the port 10 to provide sufficient air pressure to overcome the force of the spring 11, the piston 8 is returned rightwardly to recompress the spring 11 and, owing to the force of the light spring 22 acting on the guide member 21, when the annular groove 15 aligns with the respective apertures carrying the balls such as 16, the balls are displaced by the shape of the guide member 21 outwardly to re-engage with the annular groove and are then retained therewith as shown, by the shape of the guide member acting under the force of the spring 22. The spring brake actuator is thereby automatically reset on being repressurised without any further manual operation being required.

In an alternative to the cam construction described above the cam faces of members 29 and 23 may be provided by multi-start mutually engaging threads to provide the cam action for release purposes.

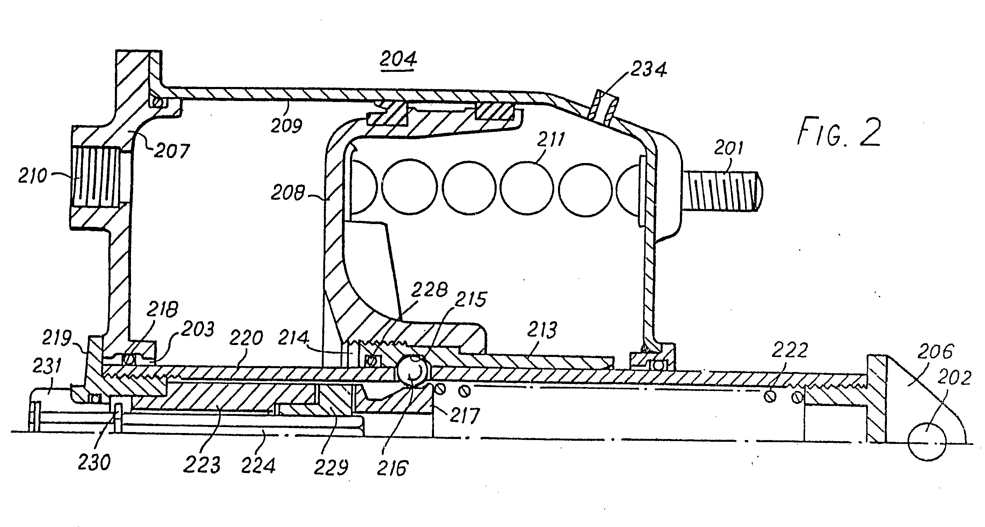

Referring to Fig. 2, this shows an alternative form of a spring brake actuator which is arranged to operate to exert a tension in an actuating rod as distinct from the thrust which is produced by the actuator of Fig. 1. The spring brake is provided with mounting studs such as 201, a cylindrical housing 204 with a cylindrical bore 209, the cylinder being closed by a pressure plate 207 having an input port 210. The pressure plate is provided with an aperture 203 and a tubular piston rod 220 extends sealingly through an aperture 203 via a seal 218. A piston 208 is carried on a tubular portion 213 which can slide through a seal 228 on the tubular piston rod 220. The tubular portion 213 is retained in the body of the piston 208 by a screw-plug 214 and has an annular recess 215 to receive a locking member in the form of a ball 216 in a corresponding aperture in the tubular piston rod 220. As in the arrangement of Fig. 1, the ball 216 is one of three such balls in respective apertures equally spaced around the tubular piston rod 220. Furthermore, the balls such as 216, are retained in the position shown by a guide member 217 which is urged leftwardly by a spring 222 retained in the tubular piston rod by an end plug 206 which is screwed into the tube 220 and is provided with an eye 202 for attachment to a clevis or other means for connection to a brake rigging. The guide member 217 is of such a shape that in the position shown, it retains the balls engaged not only with the tube 220 but also with the tubular member 213. Rightward movement of the guide member however permits the balls to descend into an annular recess such as to permit disengagement between members 213 and 220.

For the purposes of achieving rightward movement of the guide member 217 when required to release the operation of the brake actuator, the end of the piston rod 220 which extends outwardly from the pressure plate 207, is provided with an annular retaining member 219 screwed into the end of 220 and retaining by means of a circlip 230 engageable in a groove therein, a hexagonal key member 224 with an external hexagonal head 231. Bearing against an annular face of the guide member 217 which is remote from the spring 222, a member 229 is provided which has an hexagonal aperture which provides rotational keying but axial slidability thereof in relation to the member 224. Similar to the members of Fig. 4, the face of 229, which is remote from 217, is provided with cam faces which are complementary to matching cam faces on a further annular member 223 which is provided with rotational clearance in relation to 224, but is axially and rotationally retained by the member 219. Preferably, the end of 223 which engages with 219, is provided with an hexagonal section matching a corresponding internal hexagonal section on 219.

Breathing of the spring chamber is provided via a port 234.

In operation of the brake actuator of Fig. 2, pressurisation by a control pressure applied via the control port 210 on obtaining a predetermined fluid pressure on the left-hand side of the piston 208, overcomes the force of the spring 211 and the actuator is deflected into the position shown in the drawing. This is the release position for a brake operated by the actuator. In order to apply the brake, a reduction of control pressure at the port 210, sufficient to transfer at least a part of the force of the spring 211 via the piston 208 through tube portion 213, locking member 216 and tube 220 to the member 206 creates a corresponding tension in the brake rigging.

In the event of the brake being required to be released in conditions where no fluid pressure is available at the port 210, rotation of the hexagonal end 231 of the key member 224 causes corresponding rotation of the cam member 229 and, by virtue of the interacting cam faces between 223 and 229, the member 229 is deflected along the key member 224 to produce corresponding axial movement of the guide member 217. The locking members 216 are thereby permitted to descend into the annular recess in the guide member 217 and the tubular member 213 is thereby disengaged from the point of view of axial force transmission from the tubular piston rod 220. The brakes are thereby released. Upon subsequent repressurisation of the pressure chamber on the left of the piston 208, the piston 208 is deflected rightwardly against the force of the spring 211 and when the recess 215 falls into line with the balls 216 and their corresponding apertures in the rod 220, the thrust of the spring 222 being such as to tend to urge the guide member 217 in a leftward direction causes the locking members to ride upwards out of the annular recess into re-engagement with the corresponding annular recess 215 in the tubular member 213. The locking mechanism is thereby reset. Only a further rotation of the hexagonal keying member 224 will result in release of the mechanism from the shown lock condition.

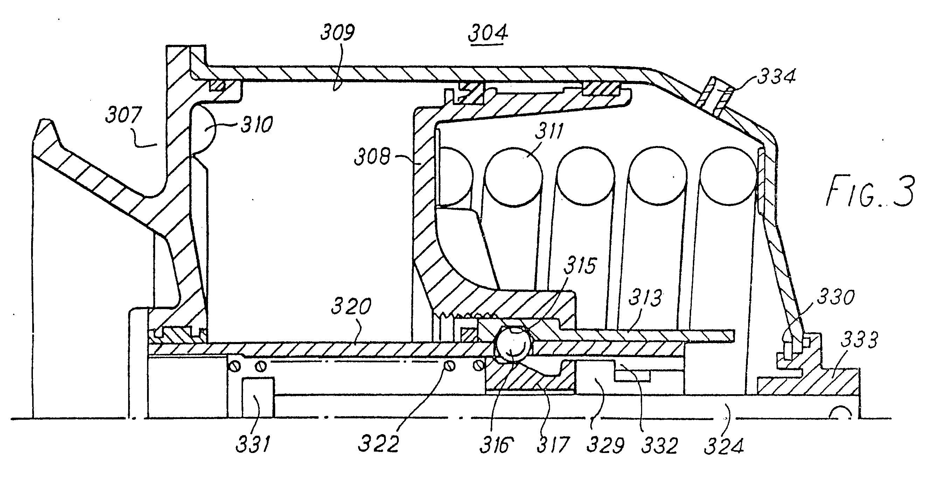

Referring now to Fig. 3 of the drawings, this shows a modified and cheapened form of spring brake actuator operating on similar principles to that which is described above with reference to Fig. 1.

As in the case of the actuator of Fig. 1, the spring brake actuator forms part of a combined spring brake actuator and pneumatically pressure-operated service brake actuator but only the spring brake actuator is shown. The spring brake actuator has a cylinder having a bore 309 and a piston 308 acted upon by a spring 311. It will be seen that the cylinder is now formed integrally with the non-pressure plate of the actuator and is of similar construction to the cylinder of Fig. 2, in that a pressure plate 307 is provided fixed to a flange of the cylinder 309 by bolts which are not shown. The piston of the actuator of Fig. 2, but the tubular piston rod extends leftwards only through the pressure plate 307. As compared with the actuator of Fig. 1, the piston 308 is provided with a lengthened skirt such as to be inherently stable within the cylinder from the point of view of alignment. In other words, the piston 308 does not rely upon the tubular piston rod being located at both ends of the housing in order to retain its alignment within the cylinder.

As in the case of the actuator of Fig. 1, the locking mechanism of Fig. 3 is provided by a tubular portion 313 having an inner annular recess 315 for engagement with locking members in the form of balls such as 316 retained in respective apertures of the tubular piston member 320. Again, the balls such as 316 are maintained in the locked position shown by virtue of an axially slidable guide member 317, the shape of which is substantially identical to the shapes of guide members employed in Figs. 1 and 2. Again, the guide member 317 is urged by a spring 322 against the flat annular face of a cam member 329, the face of which remote from 317 is provided with a cam profile. The cam profile engages with a corresponding complementary cam face profile 332 formed within the tube member 320. The said complementary cam face 332 is formed by shape-cutting of the innermost end of the tube 320 in a manner to form a configuration as shown in perspective in Fig. 5, thereby providing three cam faces 120° spaced. A keying rod is denoted by reference 324 which is hexagonal in section and is retained in a rotatable end. cap 333 by a circlip 330. The rod 324 is axially keyed to the rotatable hexagonal end cap 333 on the one hand and is provided with an internal head 331, the purpose of which is to prevent separation of all the components in the event of failure of the outer case giving rise to an explosion.

The operation of the spring brake actuator of Fig. 3 is substantially identical to that of Fig. 1, in order therefore to release a brake in the absence of a supply of fluid pressure, the end cap 333 may be rotated by the application of a suitable spanner to cause leftward movement of the member 329 due to its cam face and the guide member 317 to permit the respective balls such as 316 to move into the recess of the guide member 317 and thereby permit movement of the tubular part 313 in relation to the tubular piston member 320. The spring brake actuator is reset also on re-application of fluid pressure to the pressure chamber of the cylinder via the control port 310. Breathing of the spring chamber is provided via a port 334.

## Claims

1. A spring force applying actuator including a housing (4, 204, 304) and a pressure-responsive member (8, 208, 308) between which and the housing a heavy spring (11, 211, 311) is retained, the pressure-responsive member (8, 208, 308) forming a wall of a fluid pressure chamber and being movable by a control pressure applied at a control port (10, 210, 310) to counteract the force of the spring, a tubular force actuator output member (20, 220, 320) extending outwardly of the one end of housing and coupled to the pressure-responsive member (8, 208, 308) via a locking mechanism including a guide member (21, 217, 317) which is axially displaceable inside the tubular member (20, 220, 320) to move one or more locking elements (16, 216, 316) into a locking position between the pressure-responsive member (8, 208, 308) and the tubular member (20, 220, 320), characterised by an axially captive rotatable release member accessible from outside the housing and extendable into the tubular member (20, 220, 320) and through the guide member (21, 217, 317) to rotatably engage a cam member (29, 229, 329) said cam member (29, 229, 329) having a face which upon rotation is co-operable with a complementary cam face associated with the guide member (21, 217, 317) to produce axial movement of the guide member to enable the or each locking element (16, 216, 316) to move out of the locking position.

2. A spring force applying actuator as claimed in claim 1 characterised by the rotatable release member (24, 324) being captive in the housing.

3. A spring force applying actuator as claimed in claim 1, characterised by the tubular member (220) extending outwardly of the other end of the housing (204) and by the rotatable release member being captive in the thus extended tubular member (220).

4. A spring force applying actuator as claimed in claim 1, 2 or 3 characterised by the tubular actuator member (320) being internally deformed to provide the complementary cam face (332).

5. An actuator as claimed in claim 1, 2, 3 or 4 characterised by the release member comprising a polygonal rod (24, 224, 324) which engages a matching polygonal hole in the cam member (29, 229, 329).

6. An actuator as claimed in claims 1, 2 or claims 4 and 5 when appended to claim 1 or 2 characterised by the release member being provided at its inner end with a head (331) to resist separation of component parts upon failure of the housing.

## Patentansprüche

1. Betätiger zum Aufbringen einer Federkraft mit einem Gehäuse (4; 204; 304) und einem auf Druck ansprechenden Element (8; 208; 308), wobei zwischen dem Element und dem Gehäuse eine starke Feder (11; 211; 311) gehalten ist und wobei das auf Druck ansprechende Element (8; 208; 308) eine Wand einer Druckmittelkammer bildet und unter einem bei einer Steueröffnung (10; 210; 310) eingeführten Steuerdruck bewegbar ist, um der Kraft der Feder entgegenzuwirken, ferner mit einem rohrförmigen Abtriebselement (20; 220; 320) des Kraftbetätigers, welches sich aus dem einen Ende des Gehäuses auswärts erstreckt und welches an das auf Druck ansprechende Element (8; 208; 308) über einen Sperrmechanismus angeschlossen ist, welcher ein Führungsglied (21; 217; 317) aufweist, das innerhalb des rohrförmigen Elements (20; 220; 320) axial versetzbar ist, um ein oder mehrere Sperrelemente (16; 216; 316) in eine Sperrstellung zwischen dem auf Druck ansprechenden Element (8; 208; 308) und dem rohrförmigen Element (20; 220; 320) zu bewegen, gekennzeichnet durch ein axial festgehaltenes drehbares Auslöseelement, welches von außerhalb des Gehäuses zugänglich und in das rohrförmige Element (20; 220; 320) hinein erstreckbar ist und durch das Führungsglied (21; 217; 317) hindurch, um ein Nockenelement (29; 229; 329) auf Drehung mitzunehmen, das eine Fläche besitzt, die bei Drehung mit einer komplementären Nockenfläche zusammenwirkt, die dem Führungsglied (21; 217; 317) zugeordnet ist, um eine Axialbewegung des Führungsgliedes mit der Wirkung hervorzubringen, daß das oder jedes Sperrelement (16; 216; 316) sich aus der Sperrstellung bewegt.

2. Betätiger zum Aufbringen einer Federkraft nach Anspruch 1, dadurch gekennzeichnet, daß das drehbare Auslöseelement (24; 324) im Gehäuse festgehalten ist.

3. Betätiger zum Aufbringen einer Federkraft nach Anspruch 1, dadurch gekennzeichnet, daß das rohrförmige Element (220) sich aus dem anderen Ende des Gehäuses (204) auswärts erstreckt, und daß das drehbare Auslöseelement in dem sich derart erstreckenden rohrförmigen Element (220) festgehalten ist.

4. Betätiger zum Aufbringen einer Federkraft nach einem der Ansprüche 1, 2 oder 3, dadurch gekennzeichnet, daß das rohrförmige Betätigungselement (320) einwärts verformt ist, um die komplementäre Nockenfläche (332) zu bilden.

5. Betätiger nach Anspruch 1, 2, 3 oder 4, dadurch gekennzeichnet, daß das Auslöseelement eine polygonale Stange (24; 224; 324) aufweist, welche in eine dazu passende polygonale Öffnung im Nockenelement (29; 229; 329) eingreift.

6. Betätiger nach den Ansprüchen 1, 2 oder 4 und 5 in deren Bezugnahme auf Anspruch 1 oder 2, dadurch gekennzeichnet, daß das Auslöseelement an seinem inneren Ende mit einem Kopf (331) versehen ist, um einer Trennung von Bestandteilen bei einem Defekt des Gehäuses entgegenzuwirken.

## Revendications

1. Un actionneur appliquant une force de ressort comprenant un boîtier (4, 204, 304) et un organe sensible à la pression (8, 208, 308) entre lequel et le boîtier est retenu un puissant ressort (11, 211, 311), l'organe sensible à la pression (8, 208, 308) formant une paroi d'une chambre à pression de fluide et pouvant être déplacé par une pression de commande appliquée à un orifice de commande (10, 210, 310) pour contrecarrer la force du ressort, un organe de sortie d'actionnement à force tubulaire (20, 220, 320) qui s'étend à l'extérieur d'une extrémité du boîtier et est accouplé à l'organe sensible à la pression (8, 208, 308) par l'intermédiaire d'un mécanisme de verrouillage comprenant un organe de guidage (21, 217, 317) qui peut être déplacé axialement à l'intérieur de l'organe tubulaire (20, 220, 320) pour déplacer un ou plusieurs éléments de verrouillage (16, 216, 316) dans une position de verrouillage entre l'organe sensible à la pression (8, 208, 308) et l'organe tubulaire (20, 220, 320), caractérisé par un organe de déverrouillage rotatif axialement prisonnier, accessible de l'extérieur du boîtier, et qui peut pénétrer dans l'organe tubulaire (20, 220, 320) et à travers l'organe de guidage (21, 217, 317), pour venir en appui à rotation contre un organe à came (29, 229, 329), ledit organe à came (29, 229, 329) ayant une face qui, à la suite de sa rotation, peut coopérer avec une face de came complémentaire associée à l'organe de guidage (21, 217, 317) pour provoquer un déplacement axial de l'organe de guidage afin de permettre à l'élément de verrouillage (16, 216, 316) ou à chacun d'eux de s'écarter de la position de verrouillage.

2. Un actionneur appliquant une force de ressort tel que revendiqué dans la revendication 1, caractérisé en ce que l'organe de verrouillage rotatif (24, 324) est prisonnier à l'intérieur du boîtier.

3. Un actionneur appliquant une force de ressort tel que revendiqué dans la revendication 1, caractérisé en ce que l'organe tubulaire (220) s'étend à l'extérieur de l'autre extrémité du boîtier (204) et l'organe de déverrouillage rotatif est emprisonné dans l'organe tubulaire (220) ainsi saillant.

4. Un actionneur appliquant une force de ressort tel que revendiqué dans la revendication 1, 2 ou 3, caractérisé en ce que l'organe d'actionnement tubulaire (320) est déformé intérieurement pour former la face de came complémentaire (332).

5. Un actionneur tel que revendiqué dans la revendication 1, 2, 3 ou 4, caractérisé en ce que l'organe de déverrouillage est constitué par une tige polygonale (24, 224, 324) qui est engagée dans une ouverture polygonale correspondante formée dans l'organe à came (29, 229, 329).

6. Un actionneur tel que revendiqué dans les revendications 1, 2 ou dans les revendications 4 et 5 telles que dépendantes de la revendication 1 ou 2, caractérisé en ce que l'organe de déverrouillage est muni d'une tête (331) à son extrémité intérieure pour s'opposer à la séparation de ses éléments constitutifs à la suite d'une rupture du boîtier.

FIG. 1

_FIG. 2_

FIG.3

309    304    334

307    310

308    311

315

320    313    330

333

331    322    316    317    329    332    324

0 016 566

## *FIG. 4*

29    23

## *FIG. 5*

332

320